(19) Europäisches Patentamt
European Patent Office
Office européen des brevets

(11) Veröffentlichungsnummer: **0 089 555**
**A2**

(12)

# EUROPÄISCHE PATENTANMELDUNG

(21) Anmeldenummer: 83102326.2

(22) Anmeldetag: 09.03.83

(51) Int. Cl.³: **C 01 B 3/34**

(30) Priorität: 24.03.82 DE 3210858

(43) Veröffentlichungstag der Anmeldung:
28.09.83 Patentblatt 83/39

(84) Benannte Vertragsstaaten:
AT BE DE FR NL SE

(71) Anmelder: **Linde Aktiengesellschaft**
**Abraham-Lincoln-Strasse 21**
**D-6200 Wiesbaden(DE)**

(72) Erfinder: **Rath, Gerhard, Dipl.-Ing.**
**Kesselweg 4**
**D-8138 Andechs(DE)**

(72) Erfinder: **Michel, Siegfried**
**Moosham 76**
**D-8195 Egling 2(DE)**

(72) Erfinder: **Watson, Allan, Dr. rer.nat. Dipl.-Chem.**
**Meranerstrasse 14a**
**D-8012 Ottobrunn(DE)**

(74) Vertreter: **Schaefer, Gerhard, Dr.**
**Linde Aktiengesellschaft Zentrale Patentabteilung**
**D-8023 Höllriegelskreuth(DE)**

(54) **Verfahren zur Erzeugung von heissem Reduktionsgas.**

(57) Reduktionsgas wird durch Dampfreformierung von Kohlenwasserstoffen erzeugt. Das Reduktionsgas wird abgekühlt, Kondensat wird zur Einstellung eines niedrigen Oxidationsgrades abgetrennt und das Gas danach gegen Abhitze aus der Dampfreformierung aufgeheizt.

EP 0 089 555 A2

0089555

Verfahren zur Erzeugung von heißem Reduktionsgas

Die Erfindung betrifft ein Verfahren zur Erzeugung von heißem Reduktionsgas mit einem Oxidationsgrad unter 10 % durch katalytische Reformierung eines leichte Kohlenwasserstoffe enthaltenden Einsatzgases in Gegenwart von Wasserdampf.

Zur Erzeugung von Reduktionsgasen, die insbesondere bei der Erzreduktion benötigt werden, ist die Dampfreformierung eines kohlenwasserstoffhaltigen Einsatzmaterials ein übliches Verfahren. Dabei wird das Einsatzmaterial, beispielsweise Erdgas oder weitere Methan und/oder andere leichte Kohlenwasserstoffe enthaltende Gase oder Benzinfraktionen, mit Wasserdampf in einem endothermen Prozeß katalytisch zu einem an Wasserstoff und Kohlenmonoxid reichen Gas umgesetzt. Neben diesen reduzierenden Bestandteilen enthält dieses Produktgas aber auch noch Kohlendioxid und Wasserdampf. Der Anteil dieser letztgenannten Komponenten des reformierten Gases bestimmt den Oxidationsgrad, der durch das Verhältnis von Wasserdampf und Kohlendioxid zu Wasserstoff, Kohlenmonoxid, Wasserdampf und Kohlendioxid definiert ist.

-.-

Bei der Verwendung des reformierten Gases als Reduktionsgas werden im wesentlichen zwei Anforderungen an das Gas gestellt. Einerseits soll es einen möglichst geringen Oxidationsgrad aufweisen und andererseits muß es bei hohen Temperaturen, beispielsweise zwischen 900 und 1000° C, insbesondere bei etwa 950° C, verfügbar sein. Die Anwendung von noch höheren Temperaturen wäre zwar günstig, läßt sich jedoch wegen der erhöhten Werkstoffbeanspruchungen nur in begrenztem Maß realisieren.

Es bestehen verschiedene Möglichkeiten der Einflußnahme auf die Reaktionsführung, um ein reformiertes Gas mit geringem Oxidationsgrad zu erhalten. Im wesentlichen ist dies die Wahl eines geringen Wasserdampf/Kohlenstoff-Verhältnisses am Reformer-Eintritt sowie eine hohe Reformer-Austrittstemperatur. Beide Maßnahmen verschieben die Gaszusammensetzung gemäß den Gleichgewichten

$$CH_4 + H_2O \leftrightarrow CO + 3H_2$$
$$CO + H_2O \leftrightarrow CO_2 + H_2$$

zur Seite des Kohlenmonoxids.

Der Beeinflussung der Reaktionsführung durch diese Maßnahme sind jedoch Grenzen gesetzt, da anderenfalls die Gefahr der Rußbildung bei der Reformierung besteht. In der Praxis läßt sich ein sicherer Betrieb durch Reduzierung des Wasserdampf-Kohlenstoff-Verhältnisses nur unter solchen Bedingungen aufrechterhalten, bei denen ein reformiertes Gas mit einem Oxidationsgrad von etwa 10 % erzeugt wird.

Der Erfindung liegt deshalb die Aufgabe zugrunde, ein Verfahren der eingangs genannten Art so auszugestalten, daß ein Reduktionsgas mit einem Oxidationsgrad von weniger als 10 %, insbesondere von weniger als 5 %, erzeugt wird.

-.-

Diese Aufgabe wird dadurch gelöst, daß das bei Temperaturen oberhalb von etwa 900° C anfallende reformierte Gas abgekühlt, dabei anfallendes Kondensat abgetrennt und das verbleibende Gas mindestens teilweise im Wärmetausch mit bei der Reformierung anfallender Abwärme wieder erhitzt wird.

Das erfindungsgemäße Verfahren sieht somit vor, den Oxidationsgrad des Reduktionsgases im wesentlichen durch eine Nachbehandlung des reformierten Gases und nicht durch möglichst weitgehende Beeinflussung des Reformierprozesses einzustellen. Ein Vorteil dieser Verfahrensweise ist darin zu sehen, daß die Reformierbedingungen dabei ohne besondere Beachtung der Anforderungen an den Oxidationsgrad des Produktgases optimiert werden können. Ein weiterer Vorteil besteht darin, daß die erfindungsgemäße Reduzierung des Oxidationsgrades auf Werte unterhalb von 10 %, insbesondere auf weniger als 5 %, den Betrieb eines Reduzierofens erheblich verbessert. Durch die erneute Erhitzung des reformierten Gases nach seiner Abkühlung wird zwar ein Teil der Abwärme aus der Reformierung, die üblicherweise zur Erzeugung von Überschußdampf genutzt wurde, verbraucht, doch demgegenüber überwiegen die im Reduzierofen erzielbaren Vorteile.

Die Rückerhitzung des reformierten Gases nach der Kondensatabtrennung kann durch Wärmetausch mit heißem reformiertem Gas oder mit den heißen Rauchgasen, die infolge der Reformerbeheizung anfallen, durchgeführt werden. Es lassen sich auch beide Arten des Wärmetausches miteinander verbinden, wobei vorzugsweise zunächst ein Wärmetausch mit dem reformierten Gas und danach ein Wärmetausch mit dem Rauchgas erfolgt. Bei einer solchen Anordnung ist es günstig, das aus dem Reformer austretende Gas zunächst durch indirekten Wärmetausch mit siedendem Wasser oder mit zu überhitzendem Wasserdampf zu kühlen, bevor es in den Wärmetausch mit dem zu erhitzenden Gas tritt.

In einer vorteilhaften Ausgestaltung des erfindungsgemässen Verfahrens wird die Erhitzung des Gasstroms im Anschluß an die Kondensatabtrennung unter Verwendung von Regeneratoren durchgeführt. Dazu wird das Gas wechselweise durch einen von mehreren zyklisch betriebenen Regeneratoren geführt, der zuvor durch Hindurchleiten von heißem reformiertem Gas oder von heißem Rauchgas aufgeheizt wurde.

In einer weiteren Ausgestaltung des erfindungsgemäßen Verfahrens, die die Erzeugung von Reduktionsgasen mit besonders niedrigem Oxidationsgrad erlaubt, ist vorgesehen, daß das Gas nach der Kondensatabtrennung noch einer weiteren Behandlungsstufe unterzogen wird, in der Kohlendioxid und gegebenenfalls noch Wasserdampf aus dem Gas entfernt werden. Diese zusätzliche Reinigung kann beispielsweise in einer Adsorberstation oder durch eine Wäsche erfolgen.

Weitere Einzelheiten der Erfindung werden nachfolgend anhand einiger Ausführungsbeispiele, die in den Figuren schematisch dargestellt sind, erläutert.

Es zeigen:

Figur 1 eine erste Ausführungsform des erfindungsgemäßen Verfahrens,

Figur 2 eine weitere Ausführungsform des erfindungsgemäßen Verfahrens mit einer anderen Wärmetauscheranordnung,

Figur 3 eine weitere Ausführung des erfindungsgemäßen Verfahrens, bei der die Spitzenwärme des Reduktionsgases in einem Zusatzerhitzer erzeugt wird,

Figur 4 eine Abwandlung des Verfahrens gemäß Figur 3 und

-.-

Figur 5 eine weitere Ausführungsform der Erfindung, bei der die Erhitzung unter Verwendung von Regeneratoren erfolgt.

Bei dem in Figur 1 dargestellten Ausführungsbeispiel wird zu reformierendes Erdgas über Leitung 1 zugeführt, bei 2 mit einer geringen Menge des wasserstoffreichen Produktgases, beispielsweise zwischen 4 und 8 %, vermischt und dann im Wärmetauscher 3 angewärmt. Der Wärmetauscher 3 ist im Rauchgaskanal 4 des Reformierofens 5 angeordnet und wird von heißem Rauchgas beheizt. Das erwärmte Einsatzgemisch wird daraufhin im Hydrierreaktor 6 entschwefelt. Der Reaktor 6 enthält zwei aktive Betten 7 und 8, die nacheinander vom Einsatzgemisch durchströmt werden. Zunächst werden im Katalysatorbett 7 organische Schwefelverbindungen zu Schwefelwasserstoff hydriert, der sich dann im unteren Bett 8 des Reaktors 6 an eine dort befindliche Zinkoxidschicht anlagert. Der so entschwefelte Einsatz wird über Leitung 9 abgezogen, bei 10 mit überhitztem Prozeßdampf gemischt und auf die katalysatorgefüllten Reformerrohre 11 verteilt. In den von außen beheizten katalysatorgefüllten Reformerrohren 11 reagiert Methan und die höheren Kohlenwasserstoffe mit Wasserdampf, wobei ein im wesentlichen Wasserstoff und Kohlenmonoxid enthaltendes Gas entsteht.

Das reformierte Gas wird über Leitung 12 aus den Reformer 5 abgezogen. Der in diesem Gasstrom noch enthaltene Wasserdampf, der im wesentlichen auf den bei der Reformierung vorhandenen Überschußdampf zurückzuführen ist, wird durch Abkühlen des heißen Spaltgases in den Wärmetauschern 13, 14, 15 und 16 auskondensiert und dann im Abscheider 17 abgetrennt. Die Kühlung des reformierten Gases erfolgt im Wärmetauscher 13 gegen wieder zu erhitzendes Gas, im Wärmetauscher 14 gegen Kesselspeise-

-.-

Form. 5729 7.78

wasser, im Wärmetauscher 15 gegen Luft und im Wärmetauscher 16 gegen ein im Kreislauf geführtes Kältemittel, beispielsweise gegen Kaltwasser aus einer Kälteanlage. Das im Abscheider 17 abgetrennte Kondensat wird über Leitung 18 abgeführt, während das entfeuchtete Produktgas über Leitung 19 abgezogen wird. Der größte Teil dieses Gases gelangt über Leitung 20 zum Wärmetauscher 13 und wird dort gegen reformiertes Gas auf seine Produkttemperatur von etwa 950° C erhitzt. Ein kleiner Teil des entfeuchteten Gases wird über Leitung 21 abgezweigt und mittels des Verdichters 22 in den Erdgasstrom 1 gefördert, um hier den Hydrierwasserstoff für die Entschwefelung 6 bereitzustellen.

Die Reformerrohre 11 werden durch Verbrennung von Gichtgas, das durch Leitung 23 herangeführt wird, von außen beheizt, um den Reaktionswärmebedarf der Reformierung zu decken. Die für die Verbrennung erforderliche Verbrennungsluft wird über Leitung 24 herangeführt, im Wärmetauscher 25 gegen Rauchgas vorgewärmt und Brennern 26 des Reformierofens 5 zugeleitet. Die Beheizung der Reformerrohre 11 kann selbstverständlich auch durch Verbrennung anderer Brennstoffe, beispielsweise von Erdgas oder von flüssigen Brennstoffen, erfolgen. Dabei kann in Abhängigkeit von der Art des jeweils verwendeten Brennstoffs gegebenenfalls die Vorwärmung 25 der Verbrennungsluft entfallen.

Die nach der Wärmeabgabe an die Reformerrohre 11 noch im Rauchgas enthaltene Wärme wird im Konvektionsabschnitt 4 des Reformers zunächst im Wärmetauscher 27 zur Dampfüberhitzung, dann im Wärmetauscher 28 zur Dampferzeugung und schließlich im Wärmetauscher 3 zur Prozeßgasanwärmung genutzt. Im Falle der Verbrennungsluftvorwärmung wird das Rauchgas abschließend noch gegen die anzuwärmende Luft gekühlt, bevor es über Leitung 29 abgezogen und über das Gebläse 30 zum Kamin 31 geführt wird.

Die im Konvektionsteil 4 des Reformierofens 5 angeordnete Klappe 32 dient zur Regelung des Ofenzuges. Bei geschlossener Klappe 32 wird das Rauchgas nahezu vollständig durch den Wärmetauscher 28 geführt, während bei Öffnung der Klappe ein zunehmender Anteil des Rauchgases direkt durch den freien Kanal 33 hindurchtritt.

Zur Erzeugung des für die Dampfreformierung benötigten Prozeßdampfes wird Kesselspeisewasser über Leitung 34 herangeführt, im Wärmetauscher 14 gegen reformiertes Gas angewärmt und dann dem als Dampferzeuger ausgebildeten Wärmetauscher 28 zugeführt. Der über Leitung 35 aus dem Wärmetauscher 28 abgezogene Dampf wird im Wärmetauscher 27 gegen Rauchgas überhitzt und dann bei 10 mit dem entschwefelten Einsatz für die Reformierung vermischt. Überschüssiger Dampf wird über Leitung 36 abgezogen und einer externen Verwendung zugeführt.

Das in der Figur 2 dargestellte Verfahrensbeispiel unterscheidet sich hinsichtlich der Kühlung und Anwärmung des reformierten Gases von demjenigen der Figur 1. Das bei der Reformierung in Leitung 12 anfallende Produktgas wird gemäß Figur 2 zunächst in einem Wärmetauscher 37 gegen siedendes Wasser gekühlt und tritt demgemäß erst nach einer Absenkung der Temperatur im Wärmetauscher 13 gegen anzuwärmendes Produktgas in Wärmetausch. Das über Leitung 20 zum Wärmetauscher 13 geführte Gas aus der Kondensatabtrennung wird, da es im Wärmetauscher 13 nicht auf die erforderliche hohe Temperatur von beispielsweise 950° C erhitzt werden kann, über Leitung 38 zum rauchgasbeheizten Wärmetauscher 39 im Konvektionsteil des Reformierofens 5 geleitet und dort auf die erforderliche Temperatur erhitzt, bevor es über Leitung 40 einem Reduktionsofen zugeführt wird.

-.-

0089555

Bei dieser Verfahrensführung wird das über Leitung 34 herangeführte Wasser nach seiner Erwärmung im Wärmetauscher 14 zunächst in einem ersten Wärmetauscherabschnitt 41 im Konvektionsabschnitt 4 des Reformierofens 5 weiter erhitzt und teilverdampft, gelangt dann über Leitung 42 in den Wärmetauscher 37, wo es gegen reformiertes Gas weiterverdampft und wird schließlich über Leitung 43 in den Wärmetauscherabschnitt 44 im Konvektionsteil 4 des Reformierofens 5 geführt und dort vollständig verdampft. Der Dampf wird schließlich über Leitung 35 abgezogen und entsprechend der in Verbindung mit Figur 1 beschriebenen Weise weiter verwendet.

Bei der in Figur 2 dargestellten Verfahrensweise wurde angenommen,daß der Reformierofen 5 durch Verbrennung von Erdgas, das über Leitung 23 herangeführt wird, beheizt wird. In diesem Betriebsfall ist die Vorwärmung der Verbrennungsluft nicht vorgesehen, so daß der in der Figur 1 dargestellte Wärmetauscher 25 nicht erforderlich ist.

Gegenüber dem in der Figur 1 dargestellten Verfahren weist das Verfahren gemäß Figur 2 den Vorteil auf, daß die Anwärmung des in Leitung 20 anfallenden Produktgases nicht in einem einzigen Wärmetauscher 13, sondern in zwei getrennten Stufen in den Wärmetauschern 13 und 39 erfolgt. Dies ist in der Regel trotz der höheren Zahl der benötigten Wärmetauscher vorteilhaft, da die konstruktive Ausgestaltung eines einzigen Wärmetauschers 13, mit dem das zu erhitzende Gas auf Temperaturen von etwa 950° C gebracht werden soll, sehr aufwendig ist.

Eine weitere Ausgestaltung des erfindungsgemäßen Verfahrens ist in der Figur 3 dargestellt. Vom in der Figur 2 dargestellten Verfahren unterscheidet sich dieses

-.-

Verfahren dadurch, daß die abschließende Erhitzung des aus dem Wärmetauscher 13 austretenden Produktgases in einem zusätzlichen Erhitzer 45 geschieht, dem das Gas über Leitung 46 zugeführt wird. Dem Erhitzer 45 wird über Leitung 47 ein Brennstoff-Luft-Gemisch zugeführt, durch dessen Verbrennung das in einer Rohrschlange durch den Erhitzer 45 geführte Reduktionsgas auf eine Temperatur von etwa 950° C aufgeheizt wird. Dieses heiße Reduktionsgas tritt schließlich über Leitung 48 aus dem Erhitzer 45 aus und wird seinem Verwendungszweck zugeführt.

In der Figur 4 ist eine Abwandlung des Ausführungsbeispiels gemäß Figur 3 dargestellt, bei der das im Wärmetauscher 13 vorgewärmte Produktgas über Leitung 46 einer Regeneratorstation zugeleitet wird, um dort auf die gewünschte Endtemperatur erhitzt zu werden. Dazu tritt das über Leitung 46 herangeführte Gas über nicht dargestellte Schaltelemente wechselweise in einen der beiden Regeneratoren 50 und 51, die im zyklischen Wechsel betrieben werden. Selbstverständlich ist das Verfahren auch bei Anwendung von drei oder mehr Regeneratoren anwendbar. Im jeweils durchströmten Regenerator nimmt das Gas Wärme von einer Speichermasse auf und gelangt dann über nicht dargestellte Austrittsventile in eine Produktleitung 56.

Zur Aufheizung des jeweils nicht vom aufzuheizenden Reduktionsgases durchströmten Regenerators werden heiße Verbrennungsgase über Leitung 47 herangeführt und über die Leitung 49 und nicht dargestellte Schaltelemente jeweils einem der Regeneratoren 50 und 51 zugeleitet. Das heiße Verbrennungsgas gibt beim Durchströmen der Wärmespeichermasse Wärme an diese ab, so daß sie allmählich bis auf die Temperatur der heißen Gase aufgeheizt wird. Nach Durchströmen des jeweiligen Regenerators tritt das abgekühlte Gas über jeweils geöffnete

Schaltelemente in die Austrittsleitung 57 und wird von einem Rauchgasgebläse 58 über Leitung 59 zu einem Kamin gefördert. Ein Teilstrom des Rauchgases kann über Leitung 60 abgezweigt werden und bei 61 mit den Verbrennungsgasen in Leitung 47 vermischt werden, um jeweils eine gewünschte Temperatur des Rauchgases zur Erreichung einer bestimmten Reduktionsgastemperatur einzustellen.

Das in der Figur 4 dargestellte Ausführungsbeispiel ist besonders vorteilhaft, weil es mit direkt befeuerten Regeneratoren 50, 51 arbeitet. Diese Verfahrensweise ermöglicht es nämlich, ein Reduktionsgas sehr hoher Temperatur, beispielsweise bis zu Temperaturen von etwa 1700° C, zu erreichen.

Das in der Figur 5 dargestellte Ausführungsbeispiel zeigt die Verwendung von Regeneratoren nicht nur für die Rückerhitzung, sondern auch für die Abkühlung des reformierten Gases. Das über Leitung 12 aus dem Reformer austretende Gas tritt über Leitung 49 über nicht dargestellte Schaltelemente wechselweise in einen der beiden Regeneratoren 50 und 51, die im zyklischen Wechsel betrieben werden. Selbstverständlich ist das Verfahren auch bei Anwendung von drei oder mehr Regeneratoren anwendbar. Im jeweils durchströmten Regenerator gibt das reformierte Gas einen Großteil seiner Wärme an eine Wärmespeichermasse ab und gelangt dann über nicht dargestellte Austrittsventile in eine Sammelleitung 52, von der aus es über Leitung 53 zum Wärmetauscher 14 geleitet wird, wonach es in der schon beschriebenen Weise weiter abgekühlt wird.

Nach der Kondensatabtrennung wird der über Leitung 20 abgezogene wieder zu erhitzende Teil des reformierten Gases jeweils einem Regenerator, der in einer vorangegangenen Phase durch das heiße reformierte Gas aufgeheizt

-.-

wurde, über die Leitungen 54 bzw. 55 und nicht dargestellte Schaltelemente zugeführt. Beim Durchströmen der Wärmespeichermasse wird das Gas auf die erforderliche Temperatur von etwa 950° C erhitzt und tritt dann über jeweils geöffnete Schaltelemente in die Austrittsleitung 56.

In einem speziellen Ausführungsbeispiel des erfindungsgemäßen Verfahrens wird Erdgas, das neben 87,0 % Methan (Prozentangaben beziehen sich jeweils auf Mol-%), 6,5 % Äthan, 2,0 % Propan, 3,0 % Stickstoff und 1,5 % Kohlendioxid enthält und unter einem Druck von 6 bar sowie bei einer Temperatur von 20° C herangeführt wird, bei 2 mit Rückführgas vermischt, das 74,9 % Wasserstoff, 20,8 % Kohlenmonoxid, 3,5 % Kohlendioxid, 0,1 % Methan sowie jeweils 0,7 % Stickstoff und Wasserdampf enthält. Das Rückführgas wird in einer Menge von etwa 6 % des Erdgases zugemischt. Das Einsatzgemisch wird im Wärmetauscher 3 auf etwa 400° C erwärmt und dann im Reaktor 6 entschwefelt. Das entschwefelte Gas wird bei 10 mit einer solchen Menge Dampf vermischt, daß auf ein Mol Gas jeweils etwa ein Mol Dampf kommt. Das reformierte Gas tritt mit einer Temperatur von 1000° C bei einem Druck von etwa 3,5 bar aus dem Reformer aus und enthält 74,4 % Wasserstoff, 21,3 % Kohlenmonoxid, 3,6 % Kohlendioxid, 0,6 % Stickstoff und 0,1 % Methan (auf trockenes Gas bezogen). Daneben enthält es noch Überschußdampf in einer Menge von 21,8 %. Das reformierte Gas wird auf 20° C abgekühlt und das dabei kondensierte Wasser im Abscheider 17 abgezogen. Das verbleibende Gas hat, bezogen auf trockenes Gas, die gleiche Zusammensetzung wie die oben angegebene, ist jedoch nur noch mit 0,7 % Wasserdampf vermischt. Dieses Gas wird anschließend wieder auf 950° C erhitzt und als Reduktionsgas mit einem Oxidationsgrad von 4,3 % abgegeben.

0089555

## Patentansprüche

1. Verfahren zur Erzeugung von heißem Reduktionsgas mit einem Oxidationsgrad unter 10% durch katalytische Reformierung eines leichte Kohlenwasserstoffe enthaltenden Einsatzmaterials in Gegenwart von Wasserdampf, dadurch gekennzeichnet, daß das bei Temperaturen oberhalb von etwa 900° C anfallende reformierte Gas abgekühlt, dabei anfallendes Kondensat abgetrennt und das verbleibende Gas mindestens teilweise im Wärmetausch mit bei der Reformierung anfallender Abwärme wieder erhitzt wird.

2. Verfahren nach Anspruch 1, dadurch gekennzeichnet, daß das Gas auf Temperaturen oberhalb von etwa 900° C erhitzt wird.

3. Verfahren nach Anspruch 1 oder 2, dadurch gekennzeichnet, daß das Gas nach der Kondensatabtrennung zunächst durch indirekten Wärmetausch mit dem reformierten Gas und danach durch indirekten Wärmetausch mit bei der Reformierung anfallendem Rauchgas erhitzt wird.

-.-

4. Verfahren nach Anspruch 1 oder 2, dadurch gekennzeichnet, daß das Gas nach der Kondensatabtrennung zunächst durch indirekten Wärmetausch mit dem reformierten Gas und danach in einem befeuerten Zusatzerhitzer erhitzt wird.

5. Verfahren nach Anspruch 3 oder 4, dadurch gekennzeichnet, daß das reformierte Gas durch indirekten Wärmetausch mit siedendem Wasser gekühlt wird, bevor es in Wärmetausch mit dem zu erhitzenden Gas tritt.

6. Verfahren nach Anspruch 1 oder 2, dadurch gekennzeichnet, daß das Gas nach der Kondensatabtrennung in umschaltbaren Regeneratoren, die durch bei der Reformierung anfallende Abwärme aufgeheizt werden, erhitzt werden.

7. Verfahren nach einem der Ansprüche 1 bis 6, dadurch gekennzeichnet, daß das Gas nach der Kondensatabtrennung einer Kohlendioxid- und/oder Wasserdampf-Abtrennung unterzogen wird.

-.-

Fig. 1

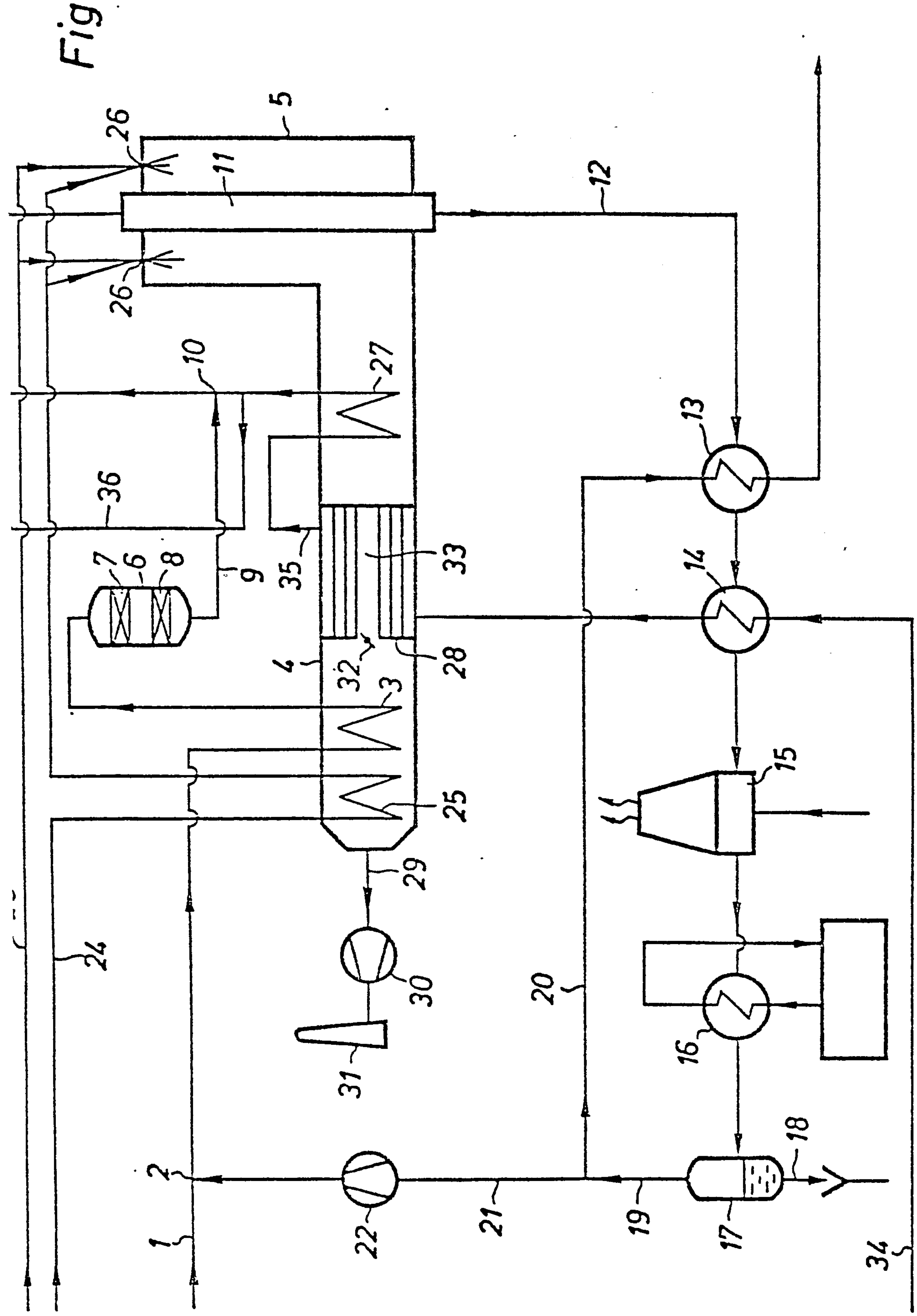
1
2
3
4
5
6
7
8
9
10
11
12
13
14
15
16
17
18
19
20
21
22
24
25
26
26
27
28
29
30
31
32
33
34
35
36

0089555

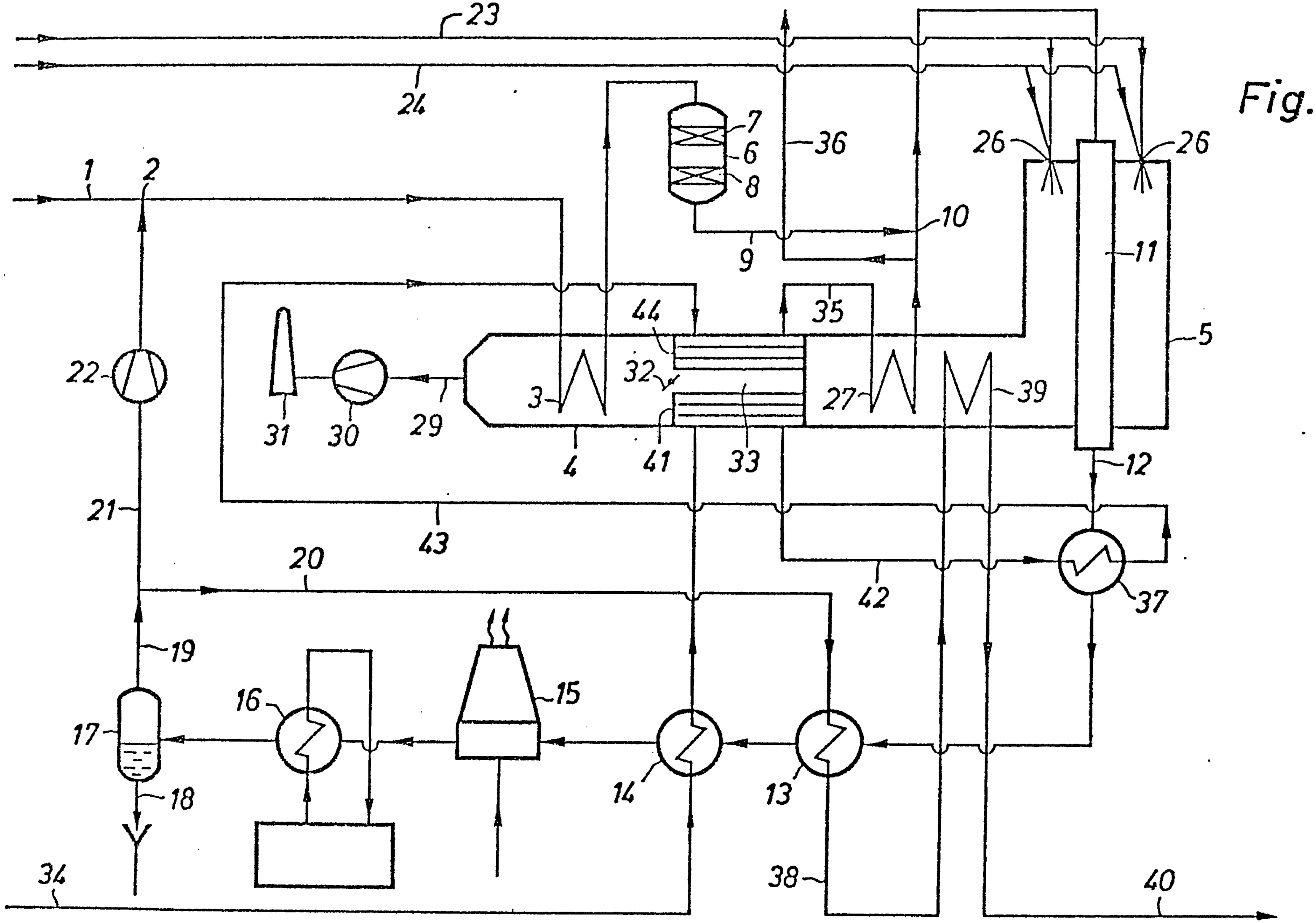


Fig. 2

0089555

Fig. 3

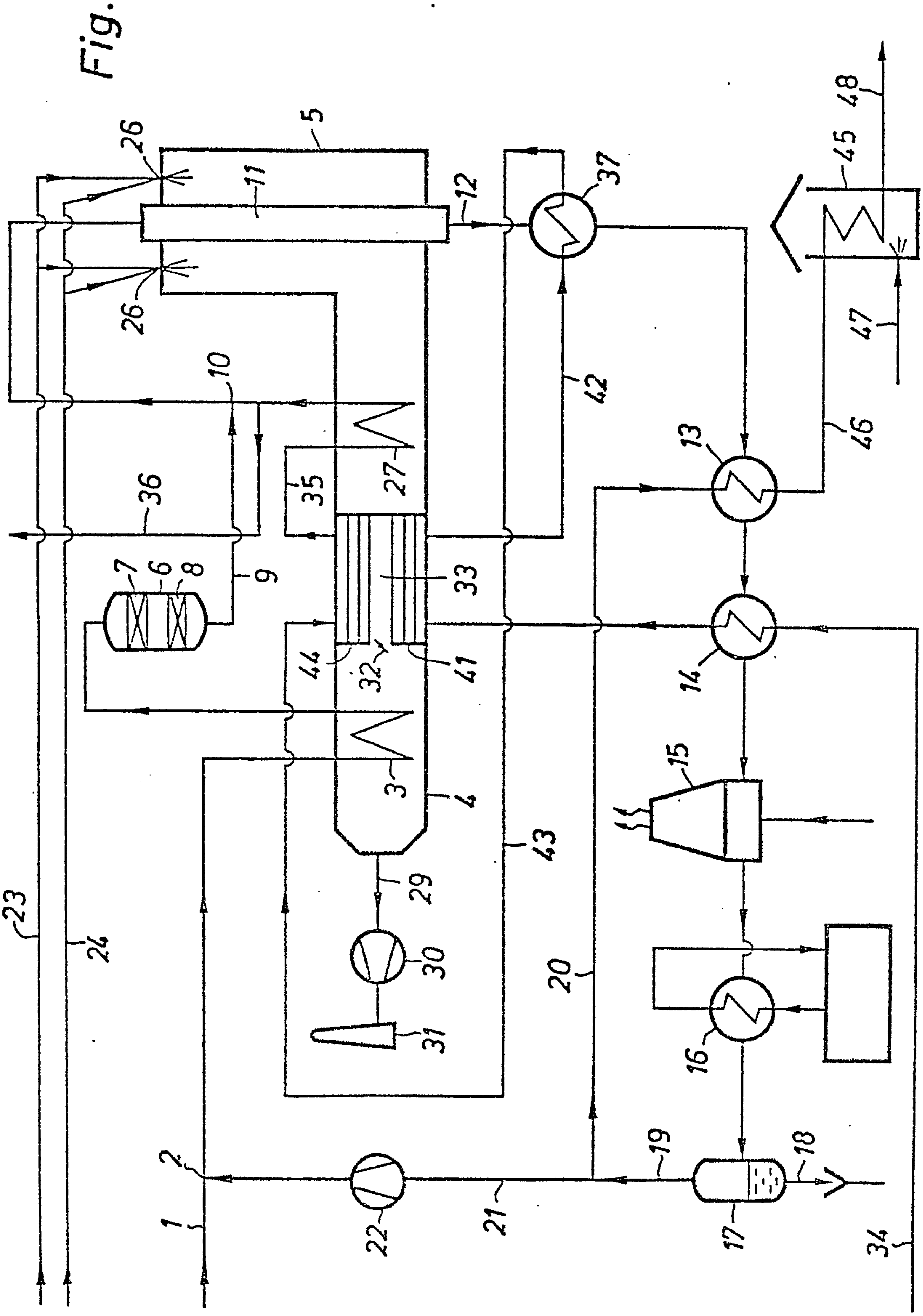

Fig. 4

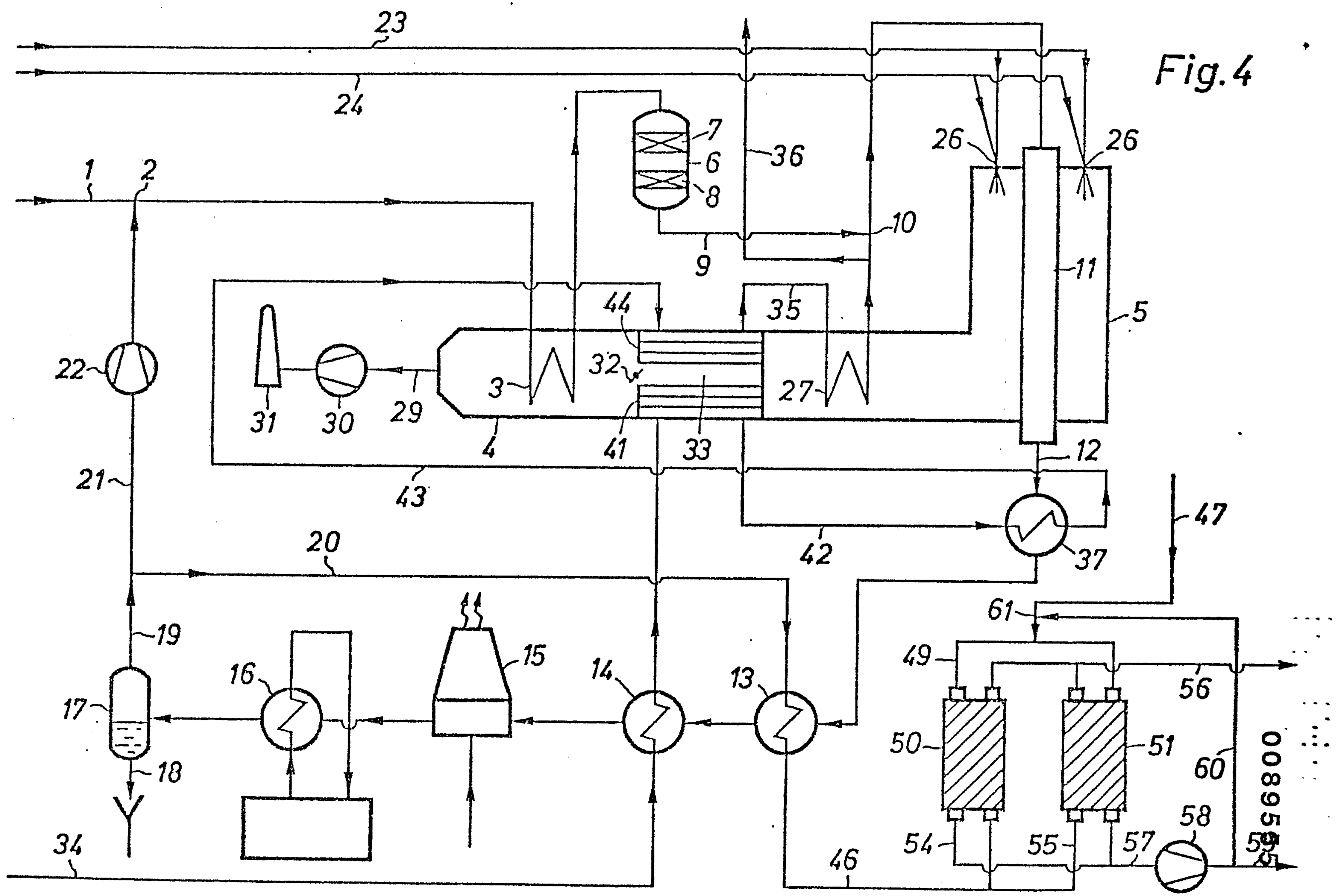


0089565

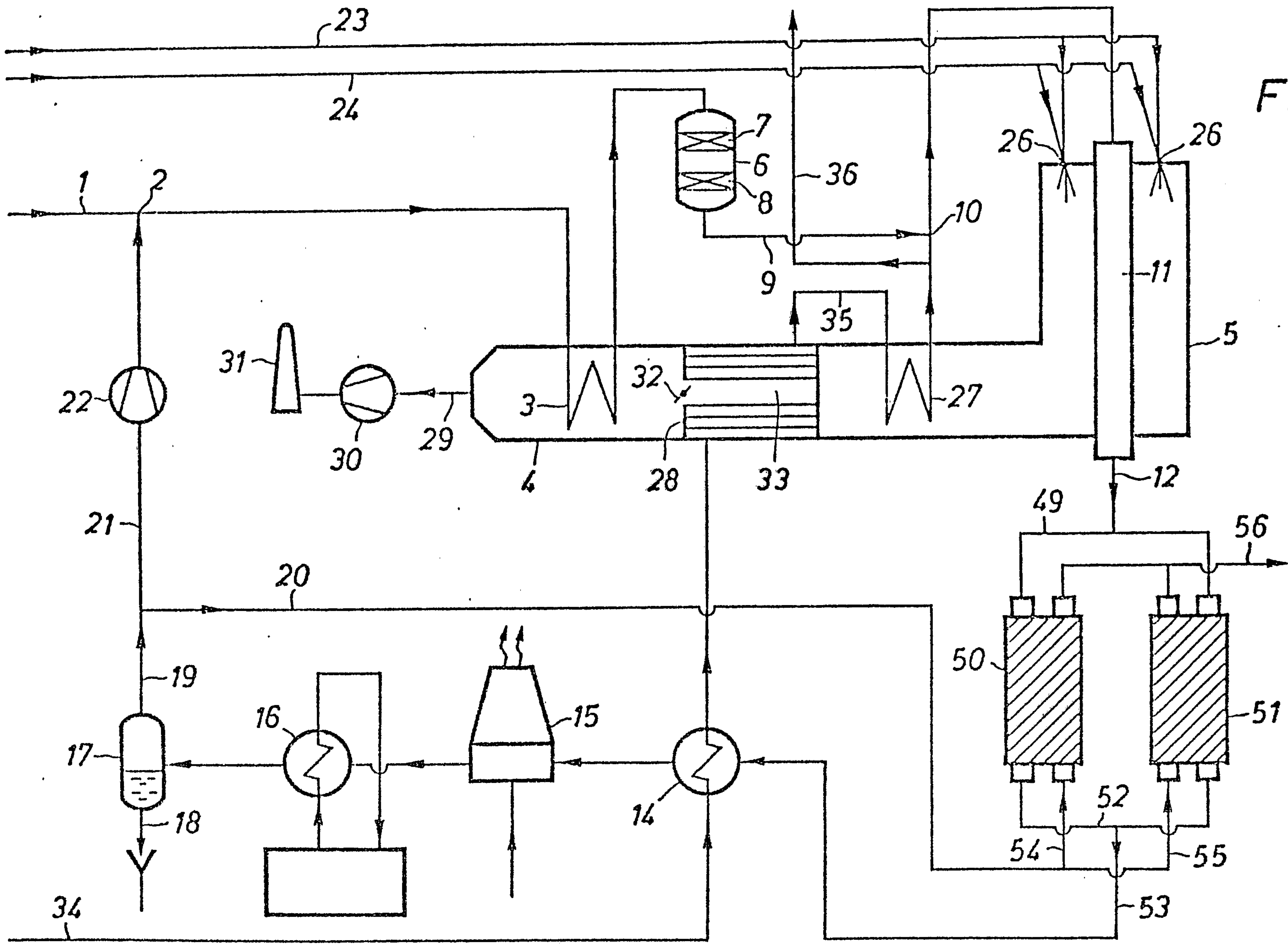
1
2
3
4
5
6
7
8
9
10
11
12
14
15
16
17
18
19
20
21
22
23
24
26
26
27
28
29
30
31
32
33
34
35
36
49
50
51
52
53
54
55
56

Fig. 5